# EUROPEAN PATENT SPECIFICATION

(11) **EP 3 158 781 B1**
(45) Date of publication and mention of the grant of the patent: **08.08.2018**
(21) Application number: 14731274.8
(22) Date of filing: 18.06.2014
(51) Int. Cl.: H04W 8/12

(54) **LOCATION INFORMATION IN MANAGED ACCESS NETWORKS**
POSITIONSINFORMATIONEN IN VERWALTETEN ZUGANGSNETZEN
INFORMATIONS DE POSITION DANS DES RÉSEAUX D'ACCÈS GÉRES

(43) Date of publication of application: 26.04.2017
(73) Proprietor: Telefonaktiebolaget LM Ericsson (publ), 164 83 Stockholm (SE)
(72) Inventor: ÖSTERLUND, Håkan, S-178 36 Ekerö (SE); ZETTERLUND, Jerker Mattias, S-168 61 Bromma (SE)
(74) Representative: Ericsson
(86) International application number: PCT/EP2014/062868
(87) International publication number: WO 2015/192898

(56) References cited:
- ORANGE: "Access Network information reporting in case of a TWAN Access", 3GPP DRAFT; S2-140328, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Taipei, Taiwan; 20140120 - 20140124 19 January 2014 (2014-01-19), XP050744644, Retrieved from the Internet: URL:http://www.3gpp.org/ftp/Meetings_3GPP_ SYNC/SA/SA2/Docs/ [retrieved on 2014-01-19]
- ALCATEL-LUCENT ET AL: "Access Network information fetching in case of a TWAN Access-use of Sh", 3GPP DRAFT; S2-133932 WAS S2-133513_NETLOC_TWAN-23402-SH-V0.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. San Francisco, USA; 20131111 - 20131115 12 November 2013 (2013-11-12), XP050743998, Retrieved from the Internet: URL:http://www.3gpp.org/ftp/Meetings_3GPP_ SYNC/SA/SA2/Docs/ [retrieved on 2013-11-12]
- "3rd Generation Partnership Project; Technical Specification Group Services and System Aspects; IP Multimedia Subsystem (IMS); Stage 2 (Release 12)", 3GPP STANDARD; 3GPP TS 23.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V12.4.0, 10 March 2014 (2014-03-10), pages 1-307, XP050769617, [retrieved on 2014-03-10]

## Description

### Technical Field

This invention relates to a method and apparatus for provision of location information in a mobile network for a user equipment connected to a managed access network. In particular, though not necessarily, the invention relates to providing Network Provided Location Information for a UE connected to a managed, untrusted wireless access network.

### Background

Telecommunications networks are required to provide the location of the participants in a call for charging and data retention purposes. For example, the network provider may have location-based charging schemes, or provide location specific services. In many jurisdictions there is also a legal requirement to provide the location of a user calling the emergency services. This information is called Network Provided Location Information (NPLI). When the caller is connected directly to the telecommunications network (i.e. via a basestation/eNodeB of the network), the NPLI is provided by the basestation. Similarly, when the caller is roaming, the NPLI is provided by the roaming network.

When determining location information for a UE connected to a Wireless Local Area Network (WLAN), e.g. via Wi-Fi™, which connects to the telecommunications network via an IP link, the NPLI is provided by WLAN. For UEs connected via Wi-Fi, the WLAN will return the location of the access point which the UE is connected to. This process is currently only standardised for WLANs where all of the connections between the UE and the telecommunications network are trusted (a Trusted WLAN Access Network, TWAN).

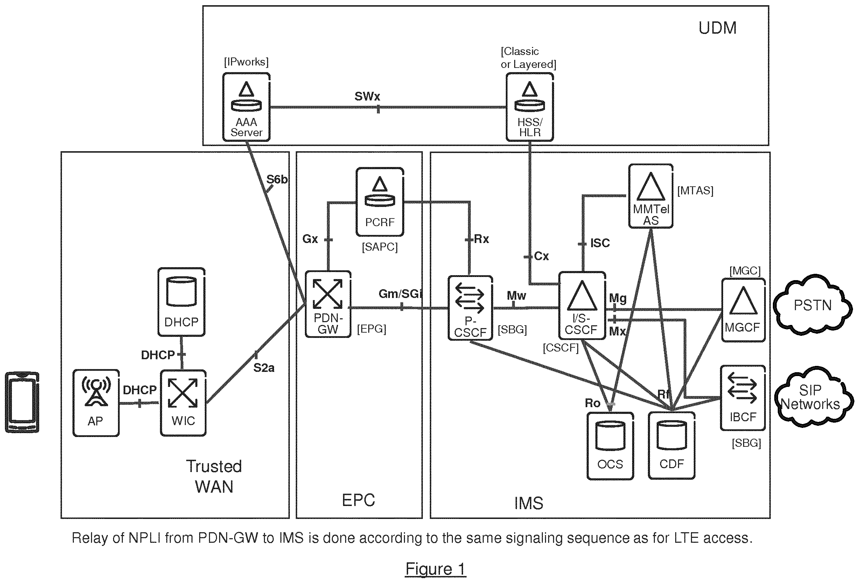

A diagram showing the connections between a telecommunications network and a trusted network is shown in Figure 1. The PDN Gateway (PDN-GW) connects to the Wireless Interface Controller (WIC) of the TWAN via the S2a interface (as defined in 3GPP TS 23.402 v12.4.0, "Architecture enhancements for non-3GPP accesses"). In order to obtain NPLI for the UE, the PDN-GW queries the WIC, which responds with a UE time zone, or a TWAN identifier comprising at least the SSID of the access point to which the UE is attached, and one of the BSSID for the access point, civic address information of the access point, or a line identifier of the access point.

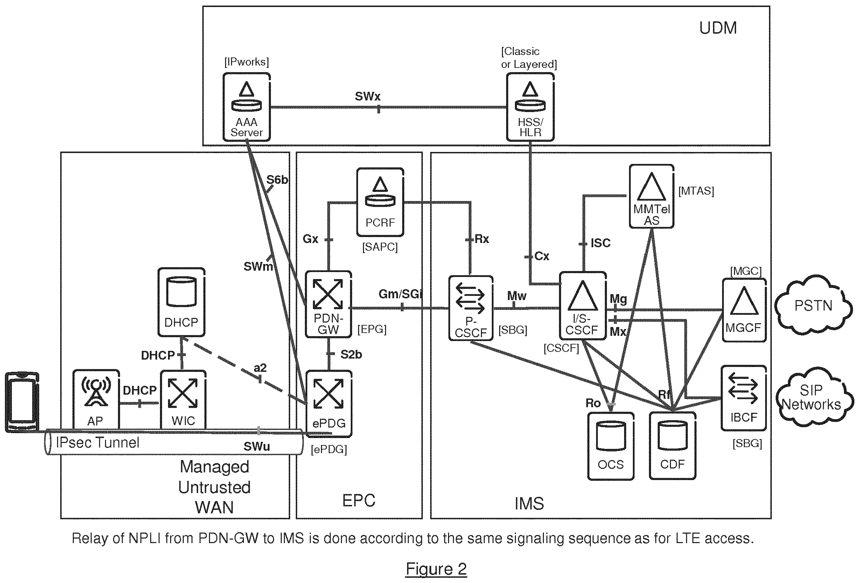

For untrusted, managed WLANs the connection between the PLMN and the UE is as shown in Figure 2 (excluding the dotted line marked a2). An untrusted, managed WLAN is a WLAN in which at least part of the connection between the UE and the PLMN is untrusted and/or insecure, and the WLAN is managed by a DHCP (Dynamic Host Control Protocol) server. Communications between the PLMN and the UE are handled by an evolved packet data gateway (ePDG). The ePDG connects to the UE via the wireless access network. Since at least one link between the ePDG and the UE is untrusted, an IPSec tunnel is set up between the ePDG and the UE during registration of the UE with the network. Following registration, the ePDG and the UE communicate via the tunnel, over the SWu interface.

Due to the structure of the IPSec tunnel, the UE will have two IP addresses, one of which is assigned by the DHCP server and belongs to an address space of the WLAN, and the other of which belongs to an address space of the PLMN. The IP address belonging to the WLAN is used for communication within the WLAN, but is not usable from within the PLMN, and the IP address belonging to the PLMN is used for communication within the PLMN but is not usable from within the WLAN. The ePDG is part of both the WLAN and PLMN networks, so it can use both IP addresses to address the UE (and in fact, it must be able to in order to establish and send packets over the IPSec tunnel).

There is currently no mechanism to securely retrieve NPLI for a UE connected to an untrusted, managed WLAN in the manner described above. Mechanisms in which the NPLI is provided by the UE have been proposed, but these are vulnerable to spoofing of the NPLI by the UE, e.g. by a user wishing to bypass charging restrictions or make malicious emergency calls.

"Access network Information reporting in case of TWAN access", S2-140328,Orange, discloses the UE informing the network of the IP address of its access point for location information purposes.

### Summary

According to a first aspect of the present invention, there is provided a method of retrieving location information for a UE connected to a managed access network. The method is performed in an ePDG upon completion of:
- the UE attaching to an access point of the managed access network including obtaining an outer IP address from a DHCP server, the IP address being part of an address space owned by the managed access network;
- establishing an IP tunnel between the ePDG and the UE over the managed access network, wherein the IP tunnel uses addresses from the address space owned by the managed access network for outer headers of traffic sent via the tunnel; and
- the UE registering with a service network via the IP tunnel, including obtaining an inner IP address from an address space of the service network.
The ePDG receives a request for location information for the UE from a PDN-GW or AAA, server, and sends a request for location information for the UE to a DHCP server of the managed access network, the request for location information comprising the outer IP address of the UE. The ePDG then receives a response containing location information for the UE from the DHCP server and sends a response containing the location information for the UE to the PDN-GW or AAA server.

According to a second aspect of the present invention, there is provided an apparatus configured to operate as an ePDG. The apparatus comprises a first, second and third transceiver, and a processor. The first transceiver is configured to communicate with a PDN-GW or an AAA, server. The second transceiver is configured to communicate with a DCHP server of a managed access network. The third transceiver configured to communicate, via an IP tunnel, with a user equipment, UE, connected to the managed access network and having an outer IP address obtained from the DHCP server, the IP address being part of an address space owned by the managed access network and an inner IP address from an address space owned by a service network. The third transceiver is further configured to send and receive traffic over the tunnel using addresses from the address space owned by the managed access network for outer headers of the traffic. The processor configured to:
- receive, via the first transceiver, a request for location information for the UE from the PDN-GW or AAA server;
- send, via the second transceiver, a request for location information for the UE to the DHCP server, the second request for location information comprising the outer IP address of the UE;
- receive, via the second transceiver, a response containing location information for the UE from the DHCP server;
- send, via the first transceiver, a response containing the location information for the UE to the PDN-GW or AAA server.

According to a third aspect of the invention, there is provided a system comprising an apparatus according to the first aspect, and an apparatus configured to operate as a PDN-GW or an AAA server. The apparatus comprises a transceiver and a processor. The transceiver is configured to communicate with the apparatus according to the first aspect. The processor is configured to send, via the transceiver, a request for location information for a UE to the ePDG, wherein the UE is connected to an managed access network, and to receive, via the transceiver, a response comprising location information for the UE from the ePDG.

According to a fourth aspect of the invention there is provided a computer program, comprising instructions which, when executed on at least one processor, cause the at least one processor to carry out the method according to the first or second aspect. The computer program may be embodied on a carrier such as an electronic signal, optical signal, radio signal, or a non-transitory computer readable storage medium.

### Brief Description of the Drawings

Figure 1 is a diagram showing the connections between a PLMN and a trusted WLAN;
Figure 2 is a diagram showing the connections between a PLMN and an untrusted WLAN;
Figure 3 is a signalling diagram for an embodiment;
Figure 4 is a flowchart of a method according to an embodiment; and

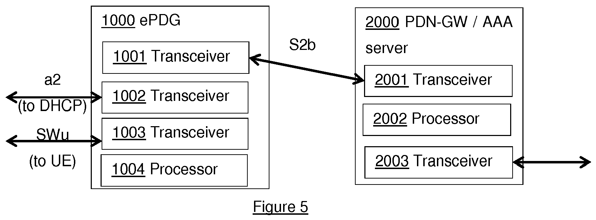

Figure 5 is a schematic diagram of part of a system according to an embodiment.

### Detailed Description

A solution is described below to allow NPLI for a UE connected to a managed, untrusted WLAN to be obtained securely. The solution relies on the DHCP server of the WLAN being trusted by the PLMN, and on a trusted interface between the DHCP server and the PLMN (labelled a2 in Figure 2). The a2 interface may be set up over a trusted connection or by using any suitable security protocol over an untrusted connection to prevent man-in-the-middle attacks.

The solution lies in querying the DHCP server in order to obtain the access point information for the access point that the UE is connected to. This access point information may be in a similar format to the TWAN information obtained for a trusted WLAN. Note that the UE has two IP addresses, one for the WLAN address space (a WLAN-IP), and one for the PLMN address space (a PLMN-IP). In order for a query to be understood by the DHCP server, it must refer to the UE with the WLAN-IP. However, the only node of the PLMN which is aware of the WLAN-IP is the ePDG (since it acts as the terminating point for the IP tunnel used to communicate with the UE). Therefore, the request to the DHCP server should come from the ePDG. It would be possible for the ePDG to provide the WLAN-IP to another node of the PLMN, which could then make the request. However, this would involve extra signalling during registration of the UE, and any requests to a node of the WLAN are going to travel via the ePDG anyway, so the simplest solution is for the ePDG to make the request to the DHCP server. The a2 interface is therefore set up between the ePDG and the DHCP server.

The method for obtaining NPLI proceeds as follows:
1. The ePDG receives a request for NPLI for a UE. This request can come from the PDN-GW or an AAA server, depending on where the NPLI is to be used. In general, NPLI requests originating from a proxy call session control function (P-CSCF), e.g. during call setup, will be sent via the PDN-GW, and NPLI requests from application servers will be sent via the HSS/HLR and a AAA server.
2. The ePDG sends a request for NPLI for the UE to the DHCP server of the WLAN the UE is connected to. This request includes the WLAN-IP of the UE.
3. The DHCP server determines access point information for the access point to which the UE is connected, and sends this information to the ePDG (e.g. in the same format as a TWAN identifier).
4. Upon receipt of the access point information from the DHCP server, the ePDG sends this information to the node which requested NPLI. The ePDG may be required to reformat the access point information in order for it to be understood by the requesting node.

In contrast to the previously defined standard for trusted wireless access networks, the requesting node (i.e. PDN-GW or AAA server) will need to send NPLI requests via the ePDG, rather than directly to a node of the WLAN. The requesting node may determine that the UE is connected to a managed access network and is connected to the ePDG via an IP tunnel prior to sending the request for NPLI. The requesting node server will generally be acting as a forwarding point for requests from other nodes of the PLMN, so the requesting node may only send a request for NPLI to the ePDG upon receipt of a request for NPLI from a different node (e.g. a PCRF, CSCF, or HSS/HLR), and will then forward the response comprising the NPLI to that node.

The request for NPLI may be sent at PDN connection establishment, at bearer creation / modification / release and at PDN connection release.

The untrusted managed WAN related Access Network Information may be of the same format as the "TWAN Identifier" and/or may be a UE Time Zone (same as used for connection to a trusted WLAN over the S2a interface).

The WAN Identifier (i.e. the equivalent of the TWAN identifier for a trusted or untrusted WLAN) may include the SSID of the access point to which the UE is attached and may include at least one of the following elements, unless otherwise determined by the TWAN operator's policies:
- the BSSID (see IEEE Std 802.11-2007);
- civic address information of the AP to which the UE is attached;
- line identifier (Logical Access ID see ETSI ES 282 004) of the access point to which the UE is attached.

The SSID can be the same for several WLAN APs and providing SSID only may not provide an exact location, but the information may be specific enough for charging purposes.

The Information carried as part of the WAN Identifier should be defined to cater for extension in future releases.

The WAN Id may also contain the identifier of the operator of the WAN. When the WAN is operated by a mobile operator, this corresponds to a PLMN-ID. When the WAN is not operated by a mobile operator, this corresponds to an operator Name (e.g. in Realm format).

Note: The information that the access is trusted or untrusted may be indicated by a new information element within the TWAN Identifier, or as a separate element in the NPLI. Current IMS standards do not enable the IMS network to be informed if the Wi-Fi access is trusted or untrusted.

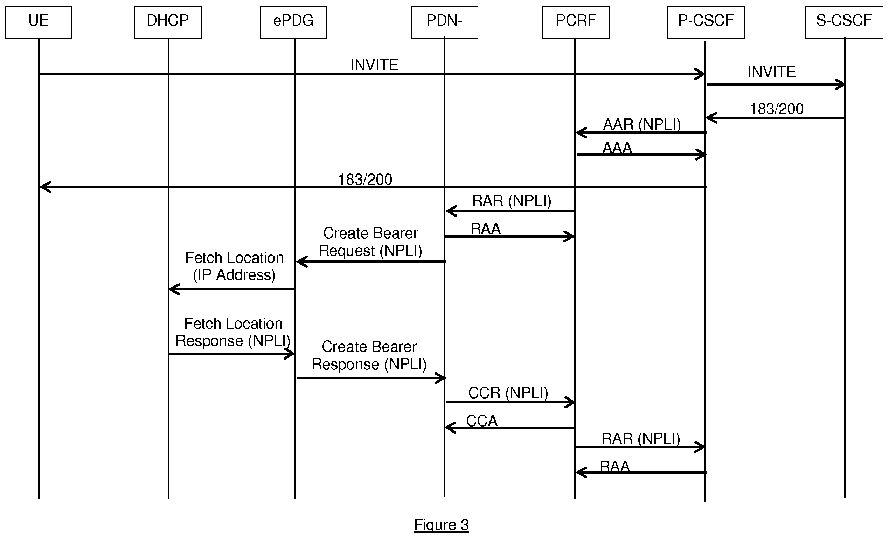

Figure 3 shows an example signalling flow of session establishment, including NPLI retrieval. The UE sends an INVITE request to a receiving party, this INVITE request is sent via the S-CSCF, which handles the session setup (signalling to the recipient network is not shown). The S-CSCF returns a 200 or 183 SIP response. When the 183/200 response reaches the P-CSCF, the P-CSCF sends an AA-Request (AAR) to the PCRF to request NPLI (e.g. user location and/or user time zone). The P-CSCF subscribes to ACCESS_NETWORK_INFO_REPORT as part of the AAR.

The PCRF performs session binding, and sends the results back to the P-CSCF in an AA-Answer (AAA). The P-CSCF then sends the 183/200 response to the UE and the bearer is established (detailed signalling not shown). The PCRF sends a Re-Authorisation Request (RAR) to the PDN-GW, including the requested subscription to ACCESS_NETWORK_INFO_REPORT from the P-CSCF, requesting that the PDN-GW answer back when the bearer has been established and that the PDN-GW includes the NPLI for the UE in the response. The RAR comprises an identifier for the session. The PDN-GW confirms receipt of the RAR with a Re-Authorisation Answer (RAA).

The PDN-GW then initiates the dedicated bearer activation procedure by sending a Create Bearer Request to the ePDG with a request to forward NPLI to the PDN-GW when the bearer has been established. The ePDG sends a request to the DHCP server to fetch the location of the UE, using the UE's WLAN-IP as a key. The DHCP server responds with the access point information. This access point information becomes the NPLI.

The ePDG sends a Create Bearer Response containing the NPLI to the PDN-GW. The PDN-GW, upon receipt of the response, initiates the IP-CAN session modification procedure and sends a Credit Control Response (CCR) including the NPLI to the PCRF. The PCRF confirms receipt by sending a Credit Control Answer (CCA), and sends an RAR containing the NPLI to the P-CSCF. The P-CSCF acknowledges receipt of the RAR with an RAA, and provides the NPLI in the next message sent from the UE towards the remote party.

Note that the signalling is the same as in the trusted WLAN case between the PDG and all IMS nodes. Only the signalling for nodes between the PDG and the UE needs to be changed for the present solution. This avoids the need to reconfigure other nodes. The contents of the NPLI may change (e.g. to include an indicator that the WLAN is trusted or untrusted), but this can be handled relatively simply, and ideally the format would still be backwards compatible with existing solutions using the TWAN identifier.

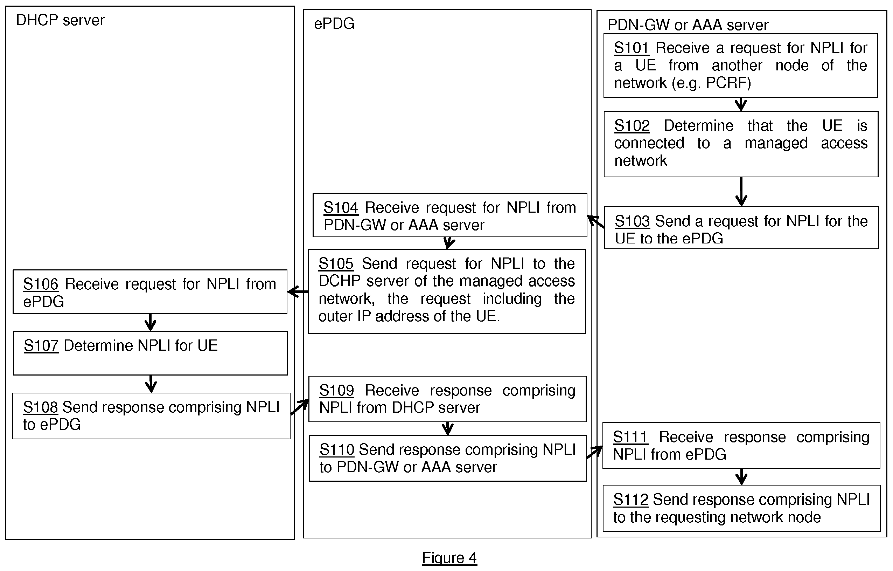

Figure 4 shows a flowchart of a method of providing NPLI for a UE connected to a managed access network.

In step S101, a PDN-GW or AAA server receives a request for NPLI for a UE from another node of the network (e.g. the PCRF or HSS/HLR). In step S102, the PDN-GW or AAA server determines that the UE is connected to a managed access network. The PDN-GW or AAA server then sends a request for NPLI for the UE to the ePDG (S103).

Upon receipt of the request (S104), the ePDG sends a request for NPLI to the DHCP server of the managed access network to which the UE is connected, the request including the WLAN-IP of the UE (S105).

The DHCP server receives the request (S106), determines NPLI for the UE (S107), and sends a response comprising the NPLI to the ePDG (S108). The ePDG receives the response from the DHCP server (S109), and sends a response comprising the NPLI to the PDN-GW or AAA server (S110). The PDN-GW or AAA server receives the response from the ePDG (S111), and sends a response comprising the NPLI to the node which requested the NPLI.

Figure 4 shows a schematic of part of a system for implementing the above method. The ePDG (1000) and PDN-GW/AAA server (2000) are shown.

The ePDG comprises a first transceiver 1001, a second transceiver 1002, a third transceiver 1003 and a processor 1004. The first transceiver 1001 is configured to communicate with the PDN-GW or AAA server. The second transceiver 1002 is configured to communicate with the DHCP server of the managed access network. The third transceiver 1003 is configured to communicate with the UE connected to the managed access network via an IP tunnel. The processor 1004 is configured to:
- receive, via the first transceiver, a request for location information for the UE from the PDN-GW or AAA server;
- send, via the second transceiver, a request for location information for the UE to the DHCP server, the second request for location information comprising the outer IP address of the UE;
- receive, via the second transceiver, a response containing location information for the UE from the DHCP server; and
- send, via the first transceiver, a response containing the location information for the UE to the PDN-GW or AAA server.

The PDN-GW/AAA server comprises a first transceiver 2001, a second transceiver 2003 and a processor 2002. The first transceiver 2001 is configured to communicate with the ePDG. The second transceiver 2003 is configured to communicate with other nodes of the network. The processor is configured to:
- send, via the first transceiver, a request for location information for a UE to the ePDG, wherein the UE is connected to an managed access network; and
- receive, via the first transceiver, a response comprising location information for the UE from the ePDG.

## Claims

1. A method of retrieving location information for a user equipment, UE, connected to a managed access network, the method being performed in an Evolved Packet Data Gateway, ePDG, the method comprising:
upon completion of:
the UE attaching to an access point of the managed access network including obtaining an outer IP address from a Dynamic Host Control Protocol, DHCP, server, the IP address being part of an address space owned by the managed access network;
establishing an IP tunnel between the ePDG and the UE over the managed access network, wherein the IP tunnel uses addresses from the address space owned by the managed access network for outer headers of traffic sent via the tunnel;
the UE registering with a service network via the IP tunnel, including obtaining an inner IP address from an address space of the service network;
performing the steps of:
receiving a request for location information for the UE from a Packet Delivery Network Gateway, PDN-GW or authentication, authorisation and accounting, AAA, server (S104);
sending a request for location information for the UE to the DHCP server of the managed access network, the request for location information comprising the outer IP address of the UE (S105);
receiving a response containing location information for the UE from the DHCP server (S109);
sending a response containing the location information for the UE to the PDN-GW or AAA server (S110).

2. A method according to claim 1, wherein the location information comprises any one or more of:
a service set identifier, SSID, for an access point, AP, to which the UE is attached;
a basic service set identification, BSSID;
physical location information of the AP to which the UE is attached;
a civic address of the AP to which the UE is attached;
a line identifier of the access point to which the UE is attached;
an identifier of the operator of the managed access network;
a time zone in which the UE is located.

3. An apparatus (1000) configured to operate as an Evolved Packet Data Gateway, ePDG, the apparatus comprising:
a first transceiver (1001) configured to communicate with a Packet Delivery Network Gateway, PDN-GW or an authentication, authorisation and accounting, AAA, server;
a second transceiver (1002) configured to communicate with a Dynamic Host Configuration Protocol, DCHP, server of an managed access network;
a third transceiver (1003) configured to:
communicate, via an IP tunnel, with a user equipment, UE, connected to the managed access network and having an outer IP address obtained from the DHCP server, the IP address being part of an address space owned by the managed access network and an inner IP address from an address space owned by a service network;
send and receive traffic over the tunnel using addresses from the address space owned by the managed access network for outer headers of the traffic;
a processor (1004) configured to:
receive, via the first transceiver, a request for location information for the UE from the PDN-GW or AAA server;
send, via the second transceiver, a request for location information for the UE to the DHCP server, the request for location information comprising the outer IP address of the UE;
receive, via the second transceiver, a response containing location information for the UE from the DHCP server;
send, via the first transceiver, a response containing the location information for the UE to the PDN-GW or AAA server.

4. A system comprising a first apparatus according to claim 3, and a second apparatus (2000) configured to operate as the Packet Delivery Network Gateway, PDN-GW or authentication, authorisation and accounting, AAA, server, the apparatus comprising:
a fourth transceiver (2001) configured to communicate with the first apparatus;
a second processor (2002) configured to:
send, via the fourth transceiver, a request for location information for a UE to the first apparatus, wherein the UE is connected to an managed access network;
receive, via the fourth transceiver, a response comprising location information for the UE from the first apparatus.

5. A system according to claim 4, wherein the second processor is further configured to determine that the UE is connected to a managed access network.

6. A system according to claim 4 or 5, wherein the second apparatus further comprises a fifth transceiver (2003) configured to communicate with a Policy and Charging Rules Function, PCRF, and the second processor is further configured to:
prior to sending the request for location information, receive, via the fifth transceiver, a further request for location information for the UE from a Policy and Charging Rules Function, PCRF;
after receiving the response comprising the location information, send, via the fifth transceiver, a further response comprising the location information for the UE to the PCRF.

7. A computer program, comprising instructions which, when executed on at least one processor, cause the at least one processor to carry out the method according to claim 1 or 2.

8. A carrier containing the computer program of claim 7, wherein the carrier is one of an electronic signal, optical signal, radio signal, or a non-transitory computer readable storage medium.

## Patentansprüche

1. Verfahren zum Abrufen von Standortinformationen für ein Benutzerendgerät, das mit einem verwalteten Zugangsnetz verbunden ist, wobei das Verfahren in einem Evolved Packet Data Gateway, ePDG, durchgeführt wird, wobei das Verfahren Folgendes umfasst:
Nach Vervollständigung:
der Benutzerendgerätanschließung an einen Zugangspunkt des verwalteten Zugangsnetzes, einschließlich Erhalten einer äußeren IP-Adresse von einem DHCP-Server (Dynamic Host Control Protocol), wobei die IP-Adresse Teil eines Adressraums ist, der dem verwalteten Zugangsnetz gehört;
der Einrichtung eines IP-Tunnels zwischen dem ePDG und dem Benutzerendgerät über das verwaltete Zugangsnetz, wobei der IP-Tunnel Adressen aus dem Adressraum des verwalteten Zugangsnetzes für äußere Überschriften des über den Tunnel gesendeten Verkehrs verwendet;
der Benutzerendgerät-Registrierung bei einem Servicenetz über den IP-Tunnel, einschließlich Erhalten einer inneren IP-Adresse von einem Adressraum des Servicenetzes;
Durchführen der Schritte:
Empfangen einer Anfrage nach Standortinformationen für das Benutzerendgerät von einem Packet Deliver Network Gateway-Server (PDN-GW-Server) oder Authentifikations-, Autorisierungs- und Buchhaltungs-Server (S104) (AAA-Server);
Senden einer Anfrage nach Standortinformation für das Benutzerendgerät an den DHCP-Server des verwalteten Zugangsnetzes, wobei die Anfrage nach Standortinformation die äußere IP-Adresse des Benutzerendgeräts umfasst (S105);
Empfangen einer Antwort, die Standortinformation für das Benutzerendgerät von dem DHCP-Server enthält (S109);
Senden einer Antwort, die die Standortinformation für das Benutzerendgerät enthält, an den PDN-GW- oder AAA-Server (S110).

2. Verfahren nach Anspruch 1, wobei die Standortinformation eines oder mehrere der Folgenden umfasst:
eine Service-Set-Kennung SSID, für einen Zugangspunkt, AP, an den das Benutzerendgerät angeschlossen ist;
eine grundlegende Service-Set-Identifikation, BSSID;
physikalische Ortsinformation des AP, an dem das Benutzerendgerät angeschlossen ist;
eine Anschrift des AP, an dem das Benutzerendgerät angeschlossen ist;
eine Leitungskennung des Zugangspunktes, an dem das Benutzerendgerät angeschlossen ist;
eine Kennung des Betreibers des verwalteten Zugangsnetzes;
eine Zeitzone, in der sich das Benutzerendgerät befindet.

3. Vorrichtung (1000), die so konfiguriert ist, dass sie als Evolved Packet Data Gateway (ePDG) arbeitet, wobei die Vorrichtung Folgendes umfasst:
einen ersten Sendeempfänger (1001), der konfiguriert ist, um mit einem Packet Delivery Gateway, PDN-GW oder einem Authentifizierungs-, Autorisierungs- und Buchhaltungs-Server (AAA-Server) zu kommunizieren;
einen zweiten Sendeempfänger (1002), der konfiguriert ist, um mit einem DHCP-Server (Dynamic Host Configuration Protocol-Server) eines verwalteten Zugangsnetzes zu kommunizieren;
einen dritten Sendeempfänger (1003), der konfiguriert ist zum:
Kommunizieren über einen IP-Tunnel mit einem Benutzerendgerät, das mit dem verwalteten Zugangsnetz verbunden ist und eine äußere IP-Adresse aufweist, die von dem DHCP-Server erhalten wird, wobei die IP-Adresse Teil eines Adressraums ist, der dem verwalteten Zugangsnetz gehört, und einer inneren IP-Adresse von einem Adressraum, der einem Servicenetz gehört;
Senden und Empfangen von Verkehr über den Tunnel unter Verwendung von Adressen aus dem Adressraum, der dem verwalteten Zugangsnetz gehört, für äußere Überschriften des Verkehrs;
einen Prozessor (1004), der konfiguriert ist zum:
Empfangen einer Anfrage nach Standortinformation für das Benutzerendgerät über den ersten Sendeempfänger von dem PDN-GW- oder AAA-Server;
Senden einer Anfrage nach Standortinformation für das Benutzerendgerät an den DHCP-Server über den zweiten Sendeempfänger, wobei die Anfrage nach Standortinformation die äußere IP-Adresse des Benutzerendgeräts umfasst;
Empfangen einer Antwort, die Standortinformation für das Benutzerendgerät enthält, von dem DHCP-Server über den zweiten Sendeempfänger;
Senden einer Antwort, die die Standortinformation für das Benutzerendgerät an den PDN-GW- oder AAA-Server enthält, über den ersten Sendeempfänger.

4. System umfassend eine erste Vorrichtung nach Anspruch 3 und eine zweite Vorrichtung (2000), die konfiguriert ist, um als das Packet Delivery Network Gateway-Server (PDN-GW-Server) oder Authentifikations-, Autorisierungs- und Buchhaltungs-Server (AAA-Server) zu arbeiten, wobei die Vorrichtung Folgendes umfasst:
einen vierten Sendeempfänger (2001), der konfiguriert ist, um mit der ersten Vorrichtung zu kommunizieren;
einen zweiten Prozessor (2002), der konfiguriert ist, zum:
Senden einer Anfrage nach Standortinformation für ein Benutzerendgerät an die erste Vorrichtung über den vierten Sendeempfänger, wobei das Benutzerendgerät mit einem verwalteten Zugangsnetz verbunden ist;
Empfangen einer Antwort, die Positionsinformation für das Benutzerendgerät von der ersten Vorrichtung umfasst, über den vierten Sendeempfänger.

5. System nach Anspruch 4, wobei der zweite Prozessor weiter konfiguriert ist, um zu bestimmen, dass das Benutzerendgerät mit einem verwalteten Zugangsnetz verbunden ist.

6. System nach Anspruch 4 oder 5, wobei die zweite Vorrichtung weiter einen fünften Sendeempfänger (2003) umfasst, der konfiguriert ist, um mit einer Policy- und Laderegeln-Funktion, PCRF, zu kommunizieren, und der zweite Prozessor weiter konfiguriert ist, zum:
Empfangen einer weiteren Anfrage nach Standortinformation, vor dem Senden der Anfrage nach Standortinformation, für das Benutzerendgerät von einer Policy- und Laderegel- Funktion, PCRF, über den fünften Sendeempfänger;
nach dem Empfangen der Antwort, die die Standortinformation umfasst, Senden einer weiteren Antwort, die die Standortinformation für das Benutzerendgerät an den PCRF umfasst, über den fünften Sendeempfänger.

7. Computerprogramm, umfassend Anweisungen, die, wenn sie auf mindestens einem Prozessor ausgeführt werden, bewirken, dass der mindestens eine Prozessor das Verfahren nach Anspruch 1 oder 2 ausführt.

8. Träger, der das Computerprogramm nach Anspruch 7 enthält, wobei der Träger ein elektronisches Signal, ein optisches Signal, ein Funksignal oder ein nicht transitorisches computerlesbares Speichermedium ist.

## Revendications

1. Procédé de récupération d'informations de localisation pour un équipement utilisateur, UE, connecté à un réseau d'accès géré, le procédé étant effectué dans une Passerelle Évoluée à Données de Paquets, ePDG, le procédé comprenant :
lors de l'achèvement de :
l'UE s'attachant à un point d'accès du réseau d'accès géré incluant l'obtention d'une adresse IP extérieure à partir d'un serveur DHCP, Protocole Dynamique de Commande d'Hôte, l'adresse IP faisant partie d'un espace d'adresses appartenant au réseau d'accès géré ;
l'établissement d'un tunnel IP entre l'ePDG et l'UE sur le réseau d'accès géré, dans lequel le tunnel IP utilise des adresses provenant de l'espace d'adresse appartenant au réseau d'accès géré pour les en-têtes extérieurs de trafic envoyés via le tunnel ;
l'UE s'enregistrant avec un réseau de services via le tunnel IP, incluant l'obtention d'une adresse IP intérieure à partir d'un espace d'adresses du réseau de services ;
l'exécution des étapes de :
réception d'une demande d'informations de localisation pour l'UE à partir d'une Passerelle de Réseau de Délivrance de Paquets, PDN-GW ou d'un serveur AAA authentification, autorisation et comptabilité (S104) ;
l'envoi d'une demande d'informations de localisation pour l'UE à partir du serveur DHCP du réseau d'accès géré, la demande d'informations de localisation comprenant l'adresse IP extérieure de l'UE (S105) ;
la réception d'une réponse contenant des informations de localisation pour l'UE en provenance du serveur DHCP (S109) ;
l'envoi d'une réponse contenant les informations de localisation pour l'UE au PDN-GW ou au serveur AAA (S110).

2. Procédé selon la revendication 1, dans lequel les informations de localisation comprennent un quelconque ou plusieurs de :
un identifiant de l'ensemble de services, SSID, pour un point d'accès, AP, auquel l'UE est attaché ;
une identification de l'ensemble de services de base, BSSID ;
des informations de localisation physique de l'AP auquel l'UE est attaché ;
une adresse civique de l'AP auquel l'UE est attaché ;
un identifiant de ligne du point d'accès auquel l'UE est attaché ;
un identifiant de l'opérateur du réseau d'accès géré ;
un fuseau horaire dans lequel l'UE est localisé.

3. Appareil (1000) configuré pour fonctionner comme une Passerelle Évoluée à Données de Paquets, ePDG, l'appareil comprenant :
un premier émetteur-récepteur (1001) configuré pour communiquer avec une Passerelle de Réseau de Délivrance de Paquets, PDN-GW ou un serveur AAA authentification, autorisation et comptabilité ;
un deuxième émetteur-récepteur (1002) configuré pour communiquer avec un serveur DHCP, Protocole Dynamique de Configuration d'Hôte, d'un réseau d'accès géré ;
un troisième émetteur-récepteur (1003) configuré pour :
communiquer, via un tunnel IP, avec un équipement utilisateur, UE, connecté au réseau d'accès géré et ayant une adresse IP extérieure obtenue à partir du serveur DHCP, l'adresse IP faisant partie d'un espace d'adresses appartenant au réseau d'accès géré et une adresse IP intérieure provenant d'un espace d'adresses appartenant à un réseau de services ;
envoyer et recevoir du trafic sur le tunnel en utilisant des adresses provenant de l'espace d'adresses appartenant au réseau d'accès géré pour des en-têtes extérieurs du trafic ;
un processeur (1004) configuré pour :
recevoir, via le premier émetteur-récepteur, une demande d'informations de localisation pour l'UE du PDN-GW ou du serveur AAA ;
envoyer, via le deuxième émetteur-récepteur, une demande d'informations de localisation pour l'UE au serveur DHCP, la demande d'informations de localisation comprenant l'adresse IP extérieure de l'UE ;
recevoir, via le deuxième émetteur-récepteur, une réponse contenant des informations de localisation pour l'UE en provenance du serveur DHCP ;
envoyer, via le premier émetteur-récepteur, une réponse contenant les informations de localisation pour l'UE au PDN-GW ou au serveur AAA.

4. Système comprenant un premier appareil selon la revendication 3 et un second appareil (2000) configuré pour fonctionner en tant que Passerelle de Réseau de Délivrance de Paquets, PDN-GW ou serveur AAA authentification, autorisation et comptabilité, l'appareil comprenant :
un quatrième émetteur-récepteur (2001) configuré pour communiquer avec le premier appareil ;
un second processeur (2002) configuré pour :
envoyer, via le quatrième émetteur-récepteur, une demande d'informations de localisation pour un UE au premier appareil, dans lequel l'UE est connecté à un réseau d'accès géré ;
recevoir, via le quatrième émetteur-récepteur, une réponse comprenant des informations de localisation pour l'UE en provenance du premier appareil.

5. Système selon la revendication 4, dans lequel le second processeur est en outre configuré pour déterminer que l'UE est relié à un réseau d'accès géré.

6. Système selon la revendication 4 ou 5, dans lequel le second appareil comprend en outre un cinquième émetteur-récepteur (2003) configuré pour communiquer avec une Fonction de Règles de Politique et de Facturation, PCRF, et le second processeur est en outre configuré pour :
avant d'envoyer la demande d'informations de localisation, recevoir, via le cinquième émetteur-récepteur, une demande supplémentaire d'informations de localisation pour l'UE en provenance d'une Fonction de Règles de Politique et Facturation, PCRF ;
après la réception de la réponse comprenant les informations de localisation, envoyer, via le cinquième émetteur-récepteur, une réponse supplémentaire comprenant les informations de localisation pour l'UE à la PCRF.

7. Programme informatique, comprenant des instructions qui, lorsqu'elles sont exécutées sur au moins un processeur, amènent l'au moins un processeur à effectuer le procédé selon la revendication 1 ou 2.

8. Porteuse contenant le programme informatique de la revendication 7, dans lequel la porteuse est l'un d'un signal électronique, d'un signal optique, d'un signal radio, ou d'un support de stockage non transitoire lisible par ordinateur.
